# EUROPEAN PATENT APPLICATION

(11) **EP 3 556 194 A1**
(43) Date of publication of application: **23.10.2019**
(21) Application number: 19170394.1
(22) Date of filing: 19.04.2019
(51) Int. Cl.: A01C 11/02

(54) **A METHOD FOR HIGH SPEED TRANSPLANTING SEPARATE SEEDLING BLOCKS AND A MACHINE FOR APPLYING THIS METHOD**

(30) Priority: 20.04.2018 NL 2020802
(71) Applicant: Geurts Investment, 5807 EE Oostrum (NL)
(72) Inventor: GEURTS, Wout P., 5807 EE Oostrum (NL); GEURTS, Elian E., 5807 EE Oostrum (NL)
(74) Representative: Janssen, Paulus J. P.

(57) **Abstract**

The present invention pertains to a method for high speed transplanting separate seedling blocks from a container (55) holding multiple seedling blocks to a growing substrate, the method comprising taking the seedling blocks from the container and filling a transporting tube (70) with a row of multiple contiguous seedling blocks at an upstream entry section (72) of the tube, transporting the seedling bocks in the tube towards a downstream exit (79) of the tube adjacent the growing substrate, separating in a pair of two contiguous seedling blocks, the pair consisting of a downstream seedling block and an upstream seedling block, the downstream block from the upstream block before the downstream block is transplanted into the substrate, wherein for the said separating, the downstream seedling block is accelerated with respect to the upstream seedling block while both seedling blocks are being transported in the tube towards the exit, wherein the method further comprises using a first grasping means (205) for grasping the seedling block to be accelerated and a second grasping means (206) for grasping the seedling block upstream of the seedling block grasped by the first grasping means. The invention also pertains to a machine for applying this method.

## Description

### GENERAL FIELD OF THE INVENTION

The present invention in general relates to a method and machine for transplanting seedlings, grown in molded pulp planting blocks, typically conjoined in tray-like groups, into a plurality of furrows where they are individually spaced. It particularly relates to a method and machine for high-speed transplanting of such seedlings.

### BACKGROUND OF THE INVENTION

Planting machines have been commonly known for decades. A plant setting machine which is drawn by a tractor is described in U.S. Pat. No. 2,959,141. Operators stand or sit at each side of the machine, select plants from supply hoppers, and place them on a plant tray structure in the operating path of planting arms.

A planting machine that is capable of transplanting potted plants and is incorporated in a trailer vehicle having a plurality of receptacle sub-assemblies which are disposed at an even angular spacing around the axis of a shaft is described in U.S. Pat. No. 3,872,805. Potted plants which are arrayed on trays on this planting machine are manually removed by a seated operator and are successively placed in receptacle sub-assemblies by a power-transfer system between the wheels and the shaft so that the velocity of the lowermost receptacle sub-assembly is substantially zero with respect to the ground as the contents of the receptacle are placed in an opening therein.

A planting machine for planting cartridges containing grown plant seedlings in a furrow formed by a furrower and for covering the cartridges with a soil closing implement is described in Canadian Pat. No. 634,508. The seedling cartridges are placed on trays or magazines and are shifted to planting chutes which tilt down until they abut against the bottom of a furrow, whereby the seedling cartridges slip down and are erected to a substantially vertical position while soil is closed around them.

These existing machines have limited productivity due to the need of an operator for the actual planting in the final substrate, and due to the fact that the machines require to handle the seedlings by their stems. Therefore, the art has developed a method using a mechanical transplanting machine in which seedlings blocks (wherein a "block" is not necessarily rectangular in shape) are fed from a container holding multiple seedling blocks. This way, the seedlings are maintained in easily handled modules, called "seedling blocks". In this method the seedling blocks are taken from the container and filled in a transporting tube to form a row of multiple contiguous seedling blocks at an upstream entry section of the tube. In most case, the blocks are still mechanically attached to each other. In the machine, the contiguous seedling blocks are transported towards a downstream exit of the tube, which exits is typically adjacent (i.e. very near to) the growing substrate. Immediately before transplanting, the blocks are separated into individual blocks and placed precisely in furrows in the final substrate. Finally, the root zones are covered with soil. Such a method is known i.a. from US 4,289,080 (assigned to Celanese Corporation) and EP 1222845 (assigned to Regero) and is commonly used today in transplanting seedlings. It is a prime aspect of this method that in the last pair of two contiguous seedling blocks, the downstream block is separated from the upstream block immediately before the downstream block is actually transplanted into the substrate to prevent that two seedling blocks are transplanted at the same site in the furrow.

DE 29915424 discloses a method (and corresponding machine) wherein for the separation of the blocks, the downstream seedling block is accelerated with respect to the upstream seedling block while both seedling blocks are being transported in the tube towards the exit. For this a V-shaped grasping means is used that grasps the seedling block to be accelerated.

### OBJECT OF THE INVENTION

While the known method is adequate for high speed transplanting of seeding blocks, there is a need for an even improved method, and a machine for applying the method.

### SUMMARY OF THE INVENTION

In order to meet the object of the invention, a method as outlined here above has been devised, wherein for the said separating, the downstream seedling block is accelerated with respect to the upstream seedling block while both seedling blocks are being transported in the tube towards the exit, wherein a first grasping means is used for grasping the seedling block to be accelerated and a second grasping means is used for grasping the seedling block upstream of the seedling block grasped by the first grasping means. The first and second grasping means can be provided as completely separate mechanical means. However, they may also form part of one larger means that integrates both the first and second grasping means.

This invention is based on the recognition that for the separation technologies as known from the art (i.a. US 4,289,080 and EP 1222845 as mentioned here above) the downstream pair of seedling blocks is temporarily retained in a fixed positon, typically by using a stopper fixing the last-but-one seedling block. Thereafter, the most downstream seedling block is cut of the file of seedling blocks and separated to be transplanted in its furrow. This means that the flow of seedling blocks is stopped each time the most downstream seedling block is separated to become an individual block. After this, the flow of the blocks needs to be started again, until the next seedling block reaches the separation position. Although this can all be done at a considerable speed, the repeated interruption of the flow of blocks through the transport tube costs time (and thus speed) and also, is at the cost of more complicated mechanics.

Applicant found that the blocks can also be separated into individual seedling blocks while they are being transported in the tube towards the exit, thus before they actually reach the exit and while they keep their forward motion, by simply accelerating the downstream seedling block from the contiguous upstream block. This way, although the upstream block may keep its regular transport speed in the tube, the downstream block can be separated therefrom. Indeed, this inherently means that the two blocks are no longer contiguous and thus, that the file of the seedling blocks locally (i.e. at the positon of the separated pair of blocks) increases in length, but this increase in length poses no disadvantage for the method whatsoever. The consequence is only that the tube is not 100% filled with contiguous blocks at the location where the blocks are accelerated (somewhere between the entry section of the tube and the exit), and thus, if needed, the tube may have an increased total length to have enough buffer capacity. This potential disadvantage is outweighed heavily by the substantial advantage that is provided by the present method however, namely that the flow of seedling blocks does not need to be interrupted anymore. This means that the transplanting speed can be increased even further, typically from 1.6 km/h to about 2.4 km/h. It is noted that the accelerating of the downstream block in the said pair of blocks can be accomplished in various ways, for example by actually grasping a block and accelerating it, or by moving it by taking the block on a surface with more grip (friction), or by using air flow to accelerate the block, or by using a striking/knocking action of a striking member, etc. etc.

DE 29915424 discloses the means of a grasping means to grasp the seedling block to be accelerated. For this, the machine comprises a V-shaped arrangement of two side conveyor belts, the downstream opening of which is smaller than the width of the seedling blocks. This way, the most downstream seedling block will eventually be grasped and can thus be accelerated with respect to its upstream neighbour. A disadvantage of the known method is that the separation position is not robust: often the accelerated downstream block is not separated from its direct neighbour but from the neighbours neighbour or even further upstream. Consequently two (or more) blocks are separated from the row as a pair (or row). This means that two (or more) seedlings are positioned in a pit in field as a pair (or group), and that the following pit(s) is/are left empty. This decreases the harvest (when pits are left open) and/or increases the cost of planting (when manually filling empty pits with seedling blocks). In order to prevent this, the present method and corresponding machine have been devised, in which method a second grasping means is used for grasping the seedling block upstream of the seedling block grasped by the first grasping means when accelerated.

The same way, a machine as outlined here above has been invented, in which machine said mechanism comprises accelerating means positioned between the entry section and the exit of the tube, for accelerating the downstream seedling block with respect to the upstream seedling block while both seedling blocks are being transported in the tube towards the exit.

### DEFINITIONS

*Transplanting* is the act of removing a plant from one place and introducing it elsewhere, typically in a new growing substrate.

A *seedling block* is a module of a substrate holding one young plant grown from seed.

A *tube* is a duct, i.e. a hollow elongated channel for conveying material. A tube may be discontinuous in the sense that the channel does not need to have continuous walls.

A *growing substrate* is the base on which a plant may grow from a seedling to a next growing phase. Typically, the soil is the growing substrate of plants.

A *row* is a number of single items more or less in a straight line.

A *file* is a row comprising at least three items.

*Grasping* is to seize and hold by or as if by clasping with fingers or arms

*Consecutive* is to follow one another in uninterrupted succession, also denoted as successive.

### EMBODIMENTS OF THE INVENTION

In an embodiment of the method according to the invention, in which embodiment the pair of seedling blocks is comprised in a file of at least three contiguous seedling blocks, the at least three seedling blocks are accelerated in a consecutive order while being transported in the tube towards the exit. In this embodiment, at least three seedling blocks are accelerated in successive order to be separated in each case from their corresponding upstream seedling block. In this embodiment, firstly the most downstream block in the file (called "block1 ") is accelerated with respect to its upstream partner ("block 2"). Thereafter, this block 2 is on its turn accelerated with respect to its upstream partner ("block 3") and starts chasing block 1 at the accelerated speed. Then, the third block ("block 3") is accelerated and eventually while being transported at the same accelerate speed as blocks 1 and 2. Due to the speed increase these three blocks are transported while being interdistant and thus separated. For example, if the speed at maximum acceleration is about 2 times the speed of the contiguous blocks in the main part of the tube (before the acceleration), the opening between the blocks has about the same length as each block itself.

In the invention a first grasping means is used for grasping the seedling block to be accelerated. It was found that grasping a block increases the reliability of the acceleration step of the block. Advantageously, a second grasping means is used for grasping the seedling block upstream of the seedling block grasped by the first grasping means. This way it can be prevented that the fist means accelerates two (connected) blocks at one time: by keeping hold of the upstream block that is travelling at the normal transport speed in the tube, the downstream block can be reliably accelerated to move away from the upstream block without the risk of dragging the upstream block along with the accelerated downstream block. In a further embodiment the first grasping means grasps both seedling blocks in the pair, i.e. after they have been separated, in particular all seedling blocks in the file referred to here above. This increases the transport reliability of the blocks moving at higher speed since they are no longer enclosed by neighbouring blocks.

In yet another embodiment after accelerating the seedling block, the block is decelerated while being transported in the tube towards the exit. This way, the inter distant space between the separated blocks can be decreased again which increases transport reliability and decreases the total distance along which the seedlings blocks extend in the tube. The latter may mean that with respect to a prior art tube, there is no need whatsoever to increase the length of the tube. In a further embodiment the seedling block is decelerated to a transport speed equal to a transport speed of seedling blocks in the tube upstream of a site where the seedling blocks are accelerated. This way the seedlings blocks, after the accelerating means which separates them into individual blocks, are put back into a row that is optically the same as the row of blocks upon entry in the tube but with the difference that now it is (nearly) 100% certain that all blocks are individualised (i.e. mechanically separated from its neighbouring blocks in the row). By restricting the accelerating to just a few seedling blocks, in this embodiment the total capacity of the tube (including the separating means) is hardly decreased with respect to a prior art tube of the same length without incorporating the accelerating means.

The above embodiments are also reflected in the machine according to the invention.

Next to this, in yet a further embodiment of the machine the first and/or second grasping means comprise a side conveyor belt. A side conveyor belt (also described e.g. in US 4,289,080: feature 141 in figure 21 and 23) has found to be an easy and reliable way to grasp a seedling block for holding or increasing its speed. Preferably, the first and/or second grasping means comprise two side conveyor belts, the belts being situated on opposite lateral sides of the seedling blocks. Preferably the two side conveyor belts are positioned in parallel (i.e. they run in essence in parallel, as opposed to the V-arrangement for two cooperating side conveyor belts as known from DE29915424).

The same way, the decelerating means may also comprise a third grasping means, which means on its turn may comprise one or two side conveyor belts, which belts are also preferably positioned in parallel.

The invention will now be explained in more detail by the following non limiting examples.

### EXAMPLES

Fig. 1 is a top plan view of a prior art transplanting machine.
Fig. 2 is a side view of the transplanting machine of figure 1.
Fig. 3 is a top/side view of a separating means for incorporation into a transporting tube of a (known) transplanting machine.
Fig. 4 is a top plan view of the means of figure 3.

### Figure 1 and 2

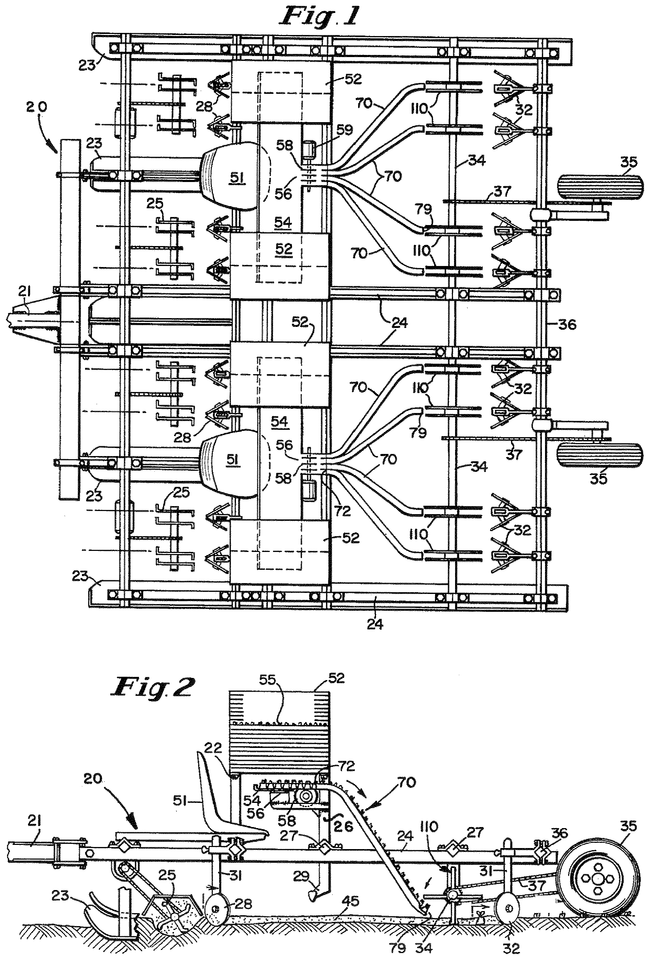

Figure 1 is a top plan view of a prior art transplanting machine such as known from US 4,289,080. Figure 2 is a side view of the transplanting machine of figure 1. The high-speed transplanting machine comprises a frame including a pull pitch 21, upper toolbars 22, frame channels 24, riser brackets 26, main toolbars 27, a footrest 29, and vertical posts 31. The transplanting machine further comprises mini-mulchers 25 of a roto-tiller type for conditioning the soil, runner shoes 23 for shaping beds, discs 28 for opening furrows therein, and discs 32 for closing the prepared furrows around the transplanted seedling blocks. The transplanting machine additionally comprises a transversely disposed shaft 34 which is attached to and rotated by traction wheels 35, a rear toolbar 36, chain drives 37 for shaft 34, and tong wheels 110. The transplanting machine still further comprises a pair of tray racks 52 for each operator, an operator seat 51 between each pair of racks 52, a cutting station 56 which is disposed rearwardly of each operator seat 51, a tray table 54 extending beneath these racks 52 and in front of each cutting station 56, a gang saw or gang blade assembly 58, and a cutting motor 59. The transplanting machine finally comprises four delivery tubes 70 for each cutting station 56.

Twenty containers 55 in the form of trays are stored in each row of each rack 52. A tray containing eight rectangular cakes (each comprising 48 seedling blocks, all mechanically interconnected) is removed from rack 52 and is placed on tray table 54. The cakes (not depicted) are sequentially placed on a cutting station 56, wherein a cake is being cut into four files by blades 58. Each file comprises 12 seedling blocks. The files of seedling blocks are filled into transporting tubes 70 at the entry section 72 to form a row of contiguous seedling blocks in each tube extending from this entry section 72 to exit 79. At this exit 79 of each tube is an escapement mechanism which is regulated by common ground wheels. The mechanism advances the file of seedling blocks until a stem is sensed. It then stops the flow of seedling blocks in that tube, holds back the next-to-last block (i.e. the block upstream of the ultimate downstream seedling block), separates the last seedling block of the file, and pushes the separated seedling block out of the tube at zero ground speed into the furrow, for example a trench or groove in the soil.

### Figure 3

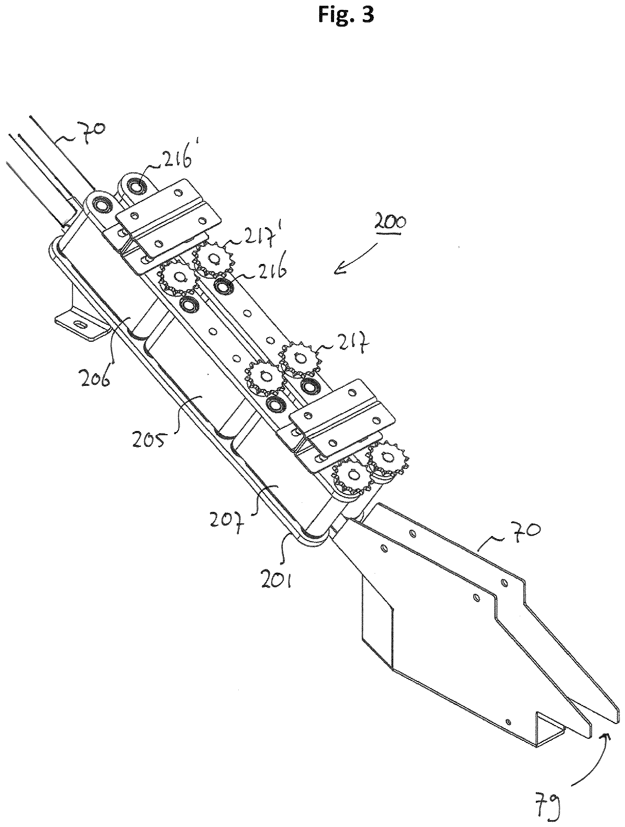

Figure 3 is a top/side view of separating means 200 for incorporation into a transporting tube 70 of a (newly made or existing) transplanting machine. According to the invention, the separating means 200 is positioned between the entry section 72 and the exit 79 of transporting tube 70, in this embodiment near the exit 79, on a supporting platform 201. The separating means comprises a first grasping means 205 which comprises two side conveyor belts. These belts are supported over axles 216 and are driven by a chain (not shown) that grasps sprocket wheels 217. The belts turn at a speed such that the transporting speed of the seedling blocks between the side conveyor belts is twice the speed of the seedling blocks in tube 70 (where the blocks are contiguous). The first grasping means 205, which functions to actually separate the blocks from their upstream partner, is preceded by an upstream second grasping means 206. These means correspond highly to the first means, also being provided over axles 216'and drive by a chain over sprocket wheels 217', but differ in that the two side conveyor belts rotate at a speed such that the seedling blocks are transported at the same speed as in the preceding (upstream) part of tube 70. This second grasping means secures the seedling blocks and prevents that two or more blocks are accelerated in the first grasping means at the same time (i.e. while being mechanically interconnected). Another advantage of these second grasping means is that this way the flow of the seedling blocks through the tube 70 is controlled, enabling the use of a very smooth, friction less inner surface of the tube which allows high speed filling of the tube. In this embodiment the separating means 200 comprise a third grasping means 207, which correspond highly to the second means. In these means the conveyor belts turn at the same speed as those of the second means, making sure that the blocks accelerated in the first means are decelerated to their original speed in the transporting tube 70. This means that at the exit 79, the seedling blocks arrive at the same speed as if no separating means 200 were present. However, the big difference is that now it is (nearly) 100% sure that each seedling block is mechanically detached from its neighbouring blocks in the row.

### Figure 4

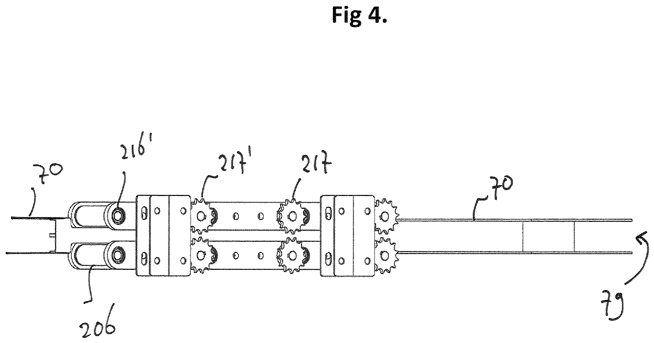

Figure 4 is a top plan view of the means of figure 3. The width of the tube 70 is such that seedling blocks are easily fitted therein. For example, a typical width of a seedling block is 38 mm, whereas the inner width of the tube is 45 to 60 mm. In the separating means 200, between the side conveyor belts, the width is slightly less than the width of the seedling blocks (e.g. 34-46 mm) to make sure the blocks are securely grasped.

## Claims

1. A method for transplanting separate seedling blocks from a container holding multiple seedling blocks to a growing substrate, the method comprising:
- taking the seedling blocks from the container (55) and filling a transporting tube (70) with a row of multiple contiguous seedling blocks at an upstream entry section (72) of the tube;
- transporting the seedling bocks in the tube towards a downstream exit (79) of the tube;
- separating in a pair of two contiguous seedling blocks, the pair consisting of a downstream seedling block and an upstream seedling block, the downstream block from the upstream block before the downstream block is transplanted into the substrate, wherein for the said separating, the downstream seedling block is accelerated with respect to the upstream seedling block while both seedling blocks are being transported in the tube towards the exit;
- using a first grasping means (205) for grasping the seedling block to be accelerated;
**characterised in that**
the method comprises using a second grasping means (206) for grasping the seedling block upstream of the seedling block grasped by the first grasping means.

2. A method according to claim 1, wherein the pair of seedling blocks is comprised in a file of at least three contiguous seedling blocks, **characterised in that** the at least three seedling blocks are accelerated in a consecutive order while being transported in the tube towards the exit.

3. A method according to any of the preceding claims, **characterised in that** the first grasping means grasps both seedling blocks in the pair.

4. A method according to any of the preceding claims, **characterised in that** after accelerating the seedling block, the block is decelerated while being transported in the tube towards the exit.

5. A method according to claim 4, **characterised in that** the seedling block is decelerated to a transport speed equal to a transport speed of seedling blocks in the tube upstream of a site where the seedling blocks are accelerated.

6. A machine for transplanting separate seedling blocks from a container (55) holding multiple seedling blocks to a growing substrate, the machine comprising:
- a transporting tube (70) for transporting a row of multiple contiguous seedling blocks from an upstream entry section (72) of the tube for receiving seedling bocks out of the container, towards a downstream exit (79) of the tube;
- a mechanism (200) for separating in a pair of two contiguous seedling blocks, the pair consisting of a downstream seedling block and an upstream seedling block, the downstream block from the upstream block before the downstream block is transplanted into the substrate, wherein the said mechanism comprises accelerating means (205) positioned between the entry section and the exit of the tube, for accelerating the downstream seedling block with respect to the upstream seedling block while both seedling blocks are being transported in the tube towards the exit;
- a first grasping means (205) for grasping the seedling block to be accelerated;
**characterised in that**
the machine comprises a second grasping means (206) for grasping the seedling block upstream of the seedling block grasped by the first grasping means.

7. A machine according to claim 6, wherein the pair of seedling blocks is comprised in a file of at least three contiguous seedling blocks, **characterised in that** the accelerating means accelerates the at least three seedling blocks in a consecutive order while being transported in the tube towards the exit.

8. A machine according to any of the claims 6 or 7, **characterised in that** the first grasping means comprise a side conveyor belt.

9. A machine according to any of the claims 6 to 8, **characterised in that** the first grasping means comprise two side conveyor belts, the belts being situated on opposite lateral sides of the seedling blocks.

10. A machine according to claim 9, **characterised in that** the two side conveyor belts are positioned in parallel.

11. A machine according to any of the claims 6 to 8, **characterised in that** the second grasping means comprise one or two side conveyor belts.

12. A machine according to claim 11, **characterised in that** the two side conveyor belts are positioned in parallel.

13. A machine according to any of the claims 6 to 12, **characterised in that** the machine comprises a decelerating means (207) positioned downstream of the accelerating means for decelerating an accelerated seedling block.

14. A machine according to claim 13, **characterised in that** the decelerating means comprise a third grasping means (207).

15. A machine according to claim 15, **characterised in that** the third grasping means comprise one or two side conveyor belts, the belts preferably are positioned in parallel.
